(19) **Europäisches Patentamt**
**European Patent Office**
**Office européen des brevets**

(11) **EP 4 761 151 A1**

(12) **EUROPEAN PATENT APPLICATION**
published in accordance with Art. 153(4) EPC

(43) Date of publication:
**17.06.2026  Bulletin 2026/25**

(21) Application number: **24911584.1**

(22) Date of filing: **28.12.2024**

(51) International Patent Classification (IPC):
*H04J 3/06* (2006.01)

(52) Cooperative Patent Classification (CPC):
**H04J 3/06**

(86) International application number:
**PCT/CN2024/143499**

(87) International publication number:
**WO 2025/140670 (03.07.2025 Gazette 2025/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **29.12.2023  CN 202311870038**

(71) Applicant: **Calterah Semiconductor Technology
(Shanghai)
Co., Ltd.
Shanghai 201210 (CN)**

(72) Inventor: **WANG, Dongyu
Shanghai 201210 (CN)**

(74) Representative: **Balder IP Law, S.L.
Paseo de la Castellana 93
5ª planta
28046 Madrid (ES)**

(54) **CLOCK SYNCHRONIZATION METHOD AND SYSTEM, AND ELECTRONIC DEVICE AND STORAGE MEDIUM**

(57) Embodiments of the present disclosure relate to the technical field of clock synchronization, and disclose a clock synchronization method, a system, an electronic device, and a storage medium. The clock synchronization method includes: synchronizing clock frequencies of a master chip and a slave chip, where the master chip and the slave chip interact through an inter-chip communication channel; determining a clock calibration value, the clock calibration value being used for characterizing a clock difference between the master chip and the slave chip; and performing clock calibration according to the clock calibration value to synchronize clocks of the master chip and the slave chip. This is at least conducive to improving synchronization accuracy between the master chip and the slave chip without introducing additional interfaces on the master chip and the slave chip.

**FIG. 1**

# Description

## CROSS REFERENCE TO RELATED APPLICATIONS

The present application claims priority to and is based on Chinese Patent Application No. 202311870038.X, filed on December 29, 2023, the entire content of which is incorporated by reference herein in its entirety.

## TECHNICAL FIELD

Embodiments of the present disclosure relate to the field of clock synchronization technologies, and in particular to a clock synchronization method, a system, an electronic device, and a storage medium.

## BACKGROUND

Radar is an electronic device that uses electromagnetic waves to detect targets. Radar transmits electromagnetic waves to illuminate a target and receives an echo of the target, thereby obtaining information such as a distance from the target to an emission point of the electromagnetic waves, a rate of change of the distance (radial velocity), an azimuth, and an altitude.

To provide better performance, multi-chip cascade technology is increasingly widely used in radar. The multi-chip cascading requires each chip to use the same time reference, and the data collected by each chip needs to remain synchronized.

However, current clock synchronization methods between a master chip and a slave chip either always have deviations and low precision, or require additional new interfaces to be introduced on the master chip and/or the slave chip.

## SUMMARY

Embodiments of the present disclosure provide a clock synchronization method, a system, an electronic device, and a storage medium, which are at least conducive to improving the synchronization accuracy between the master chip and the slave chip without introducing additional interfaces on the master chip and the slave chip.

According to some embodiments of the present disclosure, one aspect of the embodiments of the present disclosure provides a clock synchronization method, including: synchronizing clock frequencies of a master chip and a slave chip, where the master chip and the slave chip interact with each other through an inter-chip communication channel; determining a clock calibration value, the clock calibration value being used for characterizing a clock difference between the master chip and the slave chip; and performing clock calibration according to the clock calibration value to synchronize clocks of the master chip and the slave chip.

In some embodiments, the determining a clock calibration value includes: determining the clock calibration value according to timestamp information during a read operation initiated by the master chip to the slave chip.

In some embodiments, the clock calibration value is used for synchronizing the clock of the slave chip to the clock of the master chip; the performing clock calibration according to the clock calibration value includes: writing the clock calibration value into a clock register of the slave chip through a write operation initiated by the master chip.

In some embodiments, the determining the clock calibration value according to timestamp information during a read operation initiated by the master chip to the slave chip includes: determining the clock calibration value by the following formula: $T=(t3-t1)/2-(t2-t1)+t4$; where $T$ is the clock calibration value, $t1$ is a timestamp when the master chip initiates a read command, $t2$ is a timestamp when the slave chip returns read data, $t3$ is a timestamp when the master chip receives the read data, and $t4$ is a timestamp when the master chip initiates a write operation.

In some embodiments, the clock calibration value is used for synchronizing the clock of the master chip to the clock of the slave chip; the performing clock calibration according to the clock calibration value includes: modifying a clock register of the master chip according to the clock calibration value.

In some embodiments, the determining the clock calibration value according to timestamp information during a read operation initiated by the master chip to the slave chip comprises: determining the clock calibration value by the following formula: $T'=(t3-t1)/2+t2$, where $T'$ is the clock calibration value, $t1$ is a timestamp when the master chip initiates a read command, $t2$ is a timestamp when the slave chip returns read data, and $t3$ is a timestamp when the master chip receives the read data.

In some embodiments, the synchronizing clock frequencies of a master chip and a slave chip includes: modifying the clock frequency and a division factor of the slave chip according to a global clock frequency and a division factor of the master chip; or, modifying the clock frequency and a division factor of the master chip according to a global clock frequency and a division factor of the slave chip.

In some embodiments, the inter-chip communication channel includes a C2C channel.

In some embodiments, the determining a clock calibration value includes: determining the clock calibration value based on a PTP protocol on the C2C channel.

In some embodiments, the synchronizing clock frequencies of a master chip and a slave chip comprises: modifying the clock frequency and a division factor of the slave chip according to a global clock frequency and a division factor of the master chip; or, modifying the clock frequency and a division factor of the master chip according to a global clock frequency and a division factor of the slave chip.

In some embodiments, the clock synchronization method is executed during at least two data communication processes between the master chip and the slave chip.

In some embodiments, before the synchronizing clock frequencies of a master chip and a slave chip, the method further includes: triggering the operation of synchronizing the clock frequencies of the master chip and the slave chip according to a clock synchronization request initiated by the slave chip.

According to some embodiments of the present disclosure, another aspect of the embodiments of the present disclosure provides a system, including: at least two chips that are cascaded, where a respective chip of the at least two chips serves as the master chip, a subordinate chip of the at least two chips that is cascaded with the respective chip serves as the slave chip, and the master chip and the slave chip are configured to perform operations of the clock synchronization method as illustrated above.

According to some embodiments of the present disclosure, another aspect of the embodiments of the present disclosure provides an electronic device, including: the system described above.

According to some embodiments of the present disclosure, another aspect of the embodiments of the present disclosure provides a computer-readable storage medium, storing a computer program, where the computer program, when executed by a processor, performs the clock synchronization method according to any one of the above.

The technical solutions provided by the embodiments of the present disclosure have at least the following advantages.

On the basis of synchronizing the clock frequencies of the master chip and the slave chip, a clock calibration value is also determined, enabling precise clock calibration based on this clock calibration value, achieving precise clock synchronization between the master chip and the slave chip, and improving the synchronization accuracy of the master and slave chips. The interaction between the master chip and the slave chip is achieved through an inter-chip communication channel, without the need for clock software intervention. Therefore, there is no need to introduce additional interfaces on the master and slave chips.

## BRIEF DESCRIPTION OF THE DRAWINGS

One or more embodiments are illustratively described by the figures in accompanying drawings corresponding thereto, which do not constitute limitations on the embodiments. Elements with the same reference numerals in the drawings represent similar elements. Unless specifically stated, the figures in the accompanying drawings are not to scale.

FIG. 1 is a flowchart of a clock synchronization method provided in an embodiment of the present disclosure;

FIG. 2 is an interaction flowchart of a read operation initiated by a master chip to a slave chip provided in an embodiment of the present disclosure;

FIG. 3 is another interaction flowchart of a read operation initiated by a master chip to a slave chip provided in an embodiment of the present disclosure;

FIG. 4 is an interaction flowchart of a clock synchronization method provided in an embodiment of the present disclosure;

FIG. 5 is a schematic structural diagram of a system provided in an embodiment of the present disclosure;

FIG. 6 is an example structural diagram of a system provided in an embodiment of the present disclosure.

## DETAILED DESCRIPTION OF THE EMBODIMENTS

According to the background, current clock synchronization methods between master chips and slave chips either always have deviations and low precision, or require additional new interfaces to be introduced on the master chip and/or slave chip.

Analysis reveals that the reasons for the above problems are as follows: due to the different actual startup times and workflows of each of the cascaded chips, there are certain differences in the time reference and operating frequencies of each chip. These differences cause the data collected by each of the cascaded chips to be unusable directly. To solve this problem, the currently proposed clock calibration schemes mainly include the following two.

Scheme 1: through communication channels, such as Ethernet, Controller Area Network (CAN), and the like, following the clock synchronization scheme provided by the Precision Time Protocol (PTP), the clock information (such as timestamps) of the master chip is first sent to the slave chip via the communication channel. The clock information (such as timestamps) of the master chip is then parsed on the slave chip based on the clock domain of the slave chip (i.e., the slave clock domain). Then, the slave chip loads the master clock timestamp, considering the transmission delay, locally as the clock baseline. Through handshake signals or data delays, the master chip records the system delay and uses the system delay as a reference for future data. This scheme requires packaging the clock timestamp of the master chip as data. After sending the clock timestamp of the master chip to the slave chip, the slave chip needs to parse the clock timestamp of the master chip through software before using the clock timestamp of the master chip as the time baseline.

Scheme 2: The slave clock uses a General-purpose input/output (GPIO) port to sample the Primary Synchronization Signal (PSS) generated by the Global Navigation Satellite System (GNSS) on the master clock, thereby synchronizing the slave clock with the master clock. In this process, the slave clock needs to evaluate the channel and processing delays and, based on the sampled rising edge of the primary synchronization signal, configure the relevant registers of the slave clock time baseline.

For Scheme 1, the processes of packaging timestamps in the communication channel and software parsing both require a certain amount of time to complete. Therefore, this scheme introduces a certain degree of deviation, affecting the accuracy of clock synchronization. For Scheme 2, additional GPIO, intervention from the slave clock software, and estimation of the synchronization delay by the slave clock are required, along with configuring the clock baseline register.

To solve the above technical problems, embodiments of present disclosure provide a clock synchronization method, a system, an electronic device, and a storage medium. On the basis of synchronizing the clock frequencies of the master chip and the slave chip, a clock calibration value is also determined, enabling precise clock calibration based on this clock calibration value, achieving precise clock synchronization between the master chip and the slave chip, and improving the synchronization accuracy of the master chip and the slave chip. The interaction between the master chip and the slave chip is achieved through an inter-chip communication channel, without the need for clock software intervention. Therefore, there is no need to introduce additional interfaces on the master chip and slave chip.

To make the objectives, technical solutions, and advantages of the embodiments of present disclosure clearer, various embodiments of present disclosure will be described in detail below in conjunction with the accompanying drawings. However, those of ordinary skill in the art can understand that in the various embodiments of present disclosure, many technical details are proposed to enable the reader to better understand present disclosure. However, even without these technical details and various changes and modifications based on the following embodiments, the technical solutions claimed in present disclosure can be implemented.

The division of the following various embodiments is for convenience of description and should not constitute any limitation on the specific implementation of present disclosure. The various embodiments can refer to and combine with each other provided there is no contradiction.

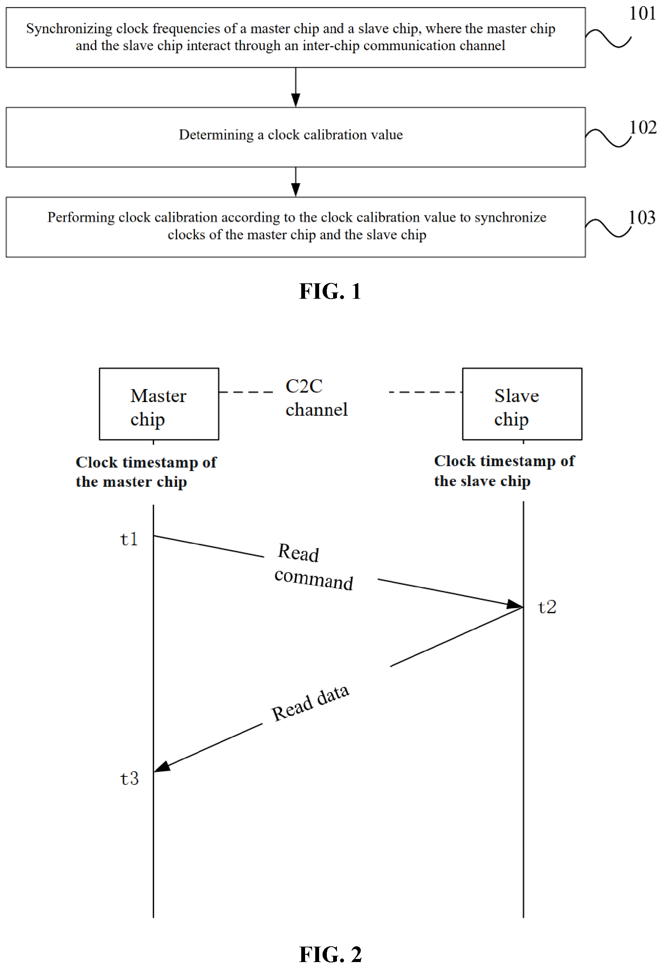

One aspect of the embodiments of present disclosure provides a clock synchronization method, applied to devices having a master chip and a slave chip, such as multi-chip cascade systems. In some embodiments, the flowchart of the clock synchronization method is shown in FIG. 1, including the following operations:

Operation 101: synchronizing the clock frequencies of the master chip and the slave chip, where the master chip and the slave chip interact with each other through an inter-chip communication channel.

Operation 102: determining a clock calibration value.

Operation 103: performing clock calibration according to the clock calibration value to synchronize the clocks of the master chip and the slave chip.

Thus, on the basis of synchronizing the clock frequencies of the master chip and the slave chip, a clock calibration value is also determined, enabling precise clock calibration based on this clock calibration value, achieving precise clock synchronization between the master chip and the slave chip, and improving the synchronization accuracy of the master chip and the slave chip. The interaction between the master chip and the slave chip is achieved through an inter-chip communication channel, without the need for clock software intervention. Therefore, there is no need to introduce additional interfaces on the master chip and the slave chip.

To facilitate a better understanding of the clock synchronization method shown in FIG. 1 by those skilled in the art, it will be explained below.

In operation 101, the clock frequencies of the master chip and the slave chip are synchronized. The master chip and the slave chip are relative terms. For example, for three cascaded chips A, B, and C, chip B is the slave chip of chip A (where chip A is the master chip) and also the master chip of chip C (where chip C is the slave chip).

It is understandable that the clock of the master chip (also called the "master clock") is the system timing initiation end clock and also the only clock baseline of the system clock. The generation of this master clock can be the default clock after system startup or obtained through timing by an upper-level computer (or upper-level master control system, and the like) via the PTP protocol. The clock of the slave chip (also called the "slave clock") is the system timing reception end clock. Generally, the master chip and the slave chip have asynchronous clocks, and clocks of the master chip and the slave chip are likely different. Therefore, clocks of the master chip and the slave chip need to be synchronized to meet the application conditions of radar multi-chip cascading.

The inter-chip communication channel is an existing communication channel between chips. In the clock synchronization method provided by the embodiments of present disclosure, the interaction between the master chip and the slave chip is achieved through the inter-chip communication channel. Therefore, there is no need to additionally introduce other interfaces.

In some examples, the inter-chip communication channel can be a Chip to Chip (C2C) channel, which is a specially defined channel used for multi-chip cascading. In this case, the master chip initiates read and write operations to access the address space (including but not limited to memory and registers) in the multi-level slave chips. This access uses a direct address mapping method. Through read and write operations on the address mapping (local address mapping plus the offset address of the slave chip on the master chip bus) of the slave chip on the master chip, direct real-time access to the addresses on the slave chip is achieved without requiring additional slave chip operations. This channel integrates a high-speed SerDes (Serializer/Deserializer) interface to achieve a high-bandwidth, low-latency communication channel.

In some embodiments, synchronizing the clock frequencies of the master chip and the slave chip can be achieved by: modifying a clock frequency and a division factor of the slave chip according to a global clock frequency and a division factor of the master chip. That is, using the clock frequency of the master chip as a reference, adjust the clock frequency and the division factor of the slave chip so that the clock frequency of the slave chip is synchronized to the clock frequency of the master chip.

In some embodiments, the synchronization of the clock frequency can be that the master chip directly writes the corresponding clock frequency and the division factor into the clock register of the slave chip through the inter-chip communication channel, thereby modifying the clock frequency of the slave chip to be consistent with the clock frequency of the master chip.

In some embodiments, synchronizing the clock frequencies of the master chip and the slave chip can also be achieved by: modifying the clock frequency and the division factor of the master chip according to the global clock frequency and the division factor of the slave chip. That is, using the clock frequency of the slave chip as the reference, adjust the clock frequency and the division factor of the master chip so that the clock frequency of the master chip is synchronized to the clock frequency of the slave chip.

It is understandable that the above are only exemplary descriptions. In some examples, the clock frequencies of both the master chip and the slave chip can also be adjusted to be consistent with a reference clock frequency, and the like, which will not be repeated here.

It should be noted that since the master chip and the slave chip interact with each other through inter-chip communication during the clock synchronization process, before performing clock synchronization, the master chip and the slave chip need to establish a connected inter-chip communication channel. For example, after the master chip and the slave chip start up respectively and each of the master chip and the slave chip completes the initialization of the local clock configuration and the inter-chip communication channel configuration, the master chip handshakes with the slave chip through the inter-chip communication channel to confirm that the channel is normal and can start to be used.

In operation 102, a clock calibration value is determined. The clock calibration value is used to characterize the clock difference between the master chip and the slave chip.

In some embodiments, determining the clock calibration value can be achieved by: determining the clock calibration value according to the timestamp information during the read operation initiated by the master chip to the slave chip. That is, directly utilizing the read and write functions provided by the inter-chip communication to determine the clock calibration value makes the process of determining the clock calibration value more concise and clear, and without the need for additional parsing processing, enabling more efficient clock synchronization.

To facilitate a better understanding of the clock synchronization implemented based on direct communication of inter-chip communication by those skilled in the art, it will be illustrated with examples below.

It is understandable that the object of clock calibration can be the master chip or the slave chip. Therefore, the clock calibration value can be the value that the clock of the master chip needs to be compensated relative to the clock of the slave chip, thereby synchronizing the clock of the master chip to the clock of the slave chip. The clock calibration value can also be the value that the clock of the slave chip needs to be compensated relative to the clock of the master chip, thereby synchronizing the clock of the slave chip to the clock of the master chip.

Therefore, the following will explain based on the above two situations.

In some examples, the clock calibration value is used to synchronize the clock of the slave chip to the clock of the master chip. In this case, performing clock calibration according to the clock calibration value can be achieved by: writing the clock calibration value into the clock register of the slave chip through a write operation initiated by the master chip. That is, modify the clock configuration of the slave chip to synchronize the clock of the slave chip to the clock of the master chip.

Furthermore, the clock calibration value determined in this case is the value that the clock of the slave chip needs to be compensated relative to the clock of the master chip. Therefore, determining the clock calibration value according to the timestamp information during the read operation initiated by the master chip to the slave chip can be achieved by the following formula:

$$T = (t3 - t1) / 2 - (t2 - t1) + t4;$$

T is the clock calibration value, t1 is the timestamp when the master chip initiates the read command, t2 is the timestamp when the slave chip returns the read data, t3 is the timestamp when the master chip receives the read data, and t4 is the timestamp when the master chip initiates the write operation.

To facilitate a better understanding of the above formula by those skilled in the art, it will be explained below in conjunction with the flowchart of the read operation initiated by the master chip to the slave chip shown in FIG. 2.

As shown in FIG. 2, the master chip sends a read command to the slave chip through the C2C channel at time t1 (the clock timestamp of the master chip). Due to transmission and response delays, after the slave chip receives the read command and responds, the slave chip returns the read data to the master chip at time t2 (the clock timestamp of the slave chip). And due to transmission delay, the master chip receives the read data at time t3 (the clock timestamp of the master chip). The C2C channel is only an example of an inter-chip communication channel. In other embodiments, other inter-chip communication channels can be used to replace the C2C channel, and the like, which will not be repeated here and hereafter. In addition, the clock of the master chip in FIG. 2 is used to illustrate that both t1 and t3 on the same straight line with the clock of the master chip are the corresponding timestamp information provided based on the clock of the master chip as the reference. The clock of the slave chip in FIG. 2 is used to illustrate that t2 on the same straight line with the clock of the slave chip is the corresponding timestamp information provided based on the clock of the slave chip as the reference.

It is understandable that a read operation consists of a read command and read data, and the read command and read data are in opposite directions but follow the same path. Therefore, it can be assumed that the time taken for the read command to reach the slave chip register is half of the read operation time, i.e., (t3 - t1) / 2. Therefore, the delay of the write operation is (t3 - t1) / 2 - (t2 - t1).

Furthermore, after the master chip determines the delay of the write operation, when writing the clock calibration value to the clock register of the slave chip, the corresponding accurate master chip clock timestamp is the master chip timestamp when the master chip initiates the write operation plus the delay of the write operation. That is, T = (t3 - t1) / 2 - (t2 - t1) + t4.

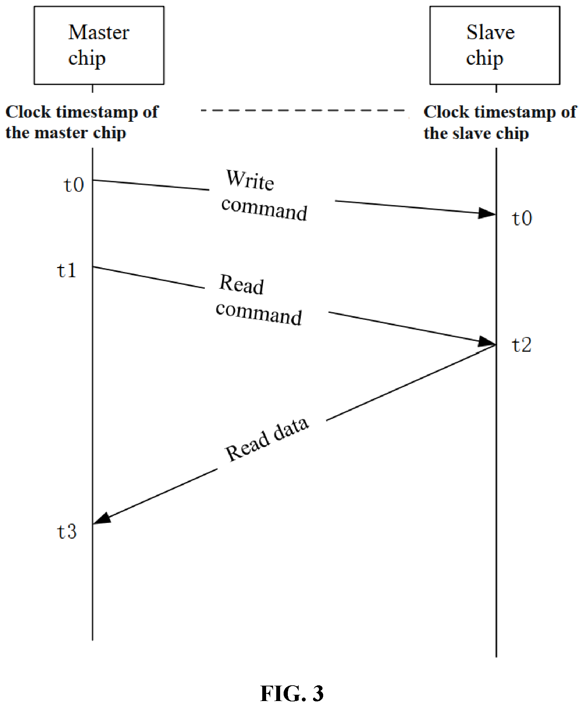

It should be noted that in some cases, the writing of T is based on an already synchronized time baseline. That is, as shown in FIG. 3, before time t1, the master chip records the local current timestamp t0, initiates a C2C channel write operation to write this timestamp t0 into the slave chip clock register, and updates the local time baseline of the slave chip to ensure that the clocks of the master chip and the slave chip are synchronized and are consistent with the time baseline. Similar to the content shown in FIG. 2, the master chip sends a read command to the slave chip at time t1 (clock timestamp of the master chip). Due to transmission and response delays, after the slave chip receives the read command and responds, the slave chip returns the read data to the master chip at time t2 (clock timestamp of the slave chip). And due to transmission delay, the master chip receives the read data at time t3 (clock timestamp of the master chip). In addition, the clock timestamps of the master chip in FIG. 3 are used to illustrate that t0, t1, and t3 on the same straight line with the clock timestamps of the master chip are all corresponding timestamp information provided based on the clock of the master chip as the reference. The clock timestamp of the slave chip in FIG. 3 are used to illustrate that t2 on the same straight line with the clock timestamp of the slave chip is the corresponding timestamp information provided based on the clock of the slave chip as the reference.

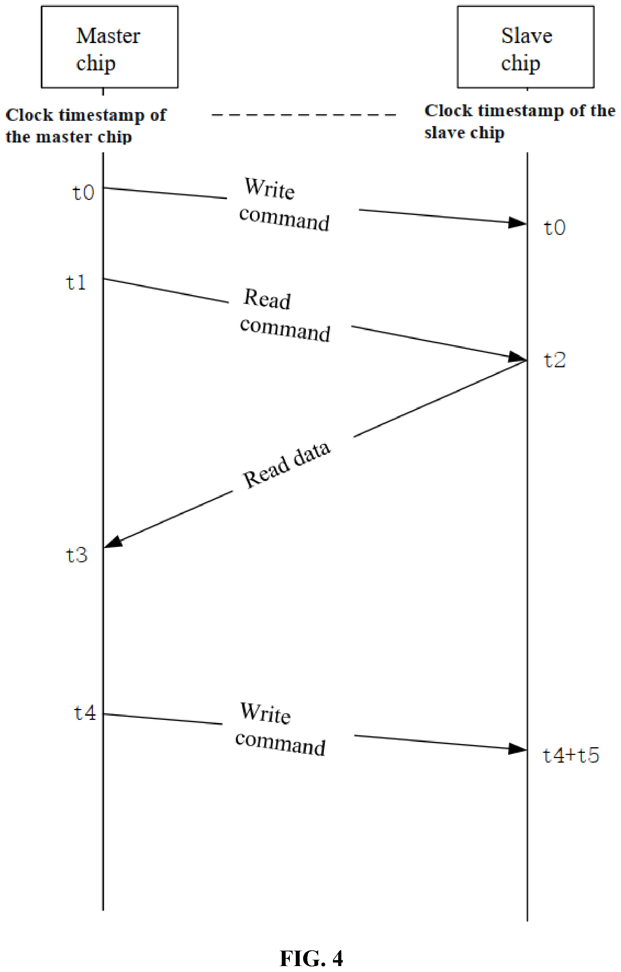

To facilitate a better understanding of the clock synchronization method provided in the above example by those skilled in the art, it will be explained below in conjunction with FIG. 4.

As shown in FIG. 4, at time t0 (clock timestamp of the master chip), the master chip initiates a write operation to the slave chip to write the clock timestamp of the master chip when the master chip initiates the write operation into the clock register of the slave chip, so that the master chip and the slave chip have the same clock baseline. Then at time t1, the master chip sends a read command to the slave chip. Then, the slave chip receives the read command sent by the master chip at time t2 and returns read data to the master chip. Then, the master chip receives the read data at time t3. Based on the above formula, the time calibration value is determined to be t5 ((t3 - t1)/2 - (t2 - t1)), and at time t4, the master chip initiates a write operation to the slave chip to write t4 + t5 (i.e., the aforementioned "T") into the clock register of the slave chip, completing the synchronization of clocks of the master chip and the slave chip.

In other examples, the clock calibration value is used to synchronize the clock of the master chip to the clock of the slave chip. In this case, performing clock calibration according to the clock calibration value can also be achieved by: modifying the clock register of the master chip according to the clock calibration value. That is, modify the clock configuration of the master chip to synchronize the clock of the master chip to the clock of the slave chip.

Furthermore, the clock calibration value determined in this case is the value that the clock of the master chip needs to be compensated relative to the clock of the slave chip. Therefore, determining the clock calibration value according to the timestamp information during the read operation initiated by the master chip to the slave chip can be determined by the following formula:

$$T' = (t3 - t1) / 2 + t2.$$

T' is the clock calibration value, t1 is the timestamp when the master chip initiates the read command, t2 is the timestamp when the slave chip returns the read data, and t3 is the timestamp when the master chip receives the read data.

As mentioned earlier, the time taken for the read command to reach the slave chip register is half of the read operation time, i.e., (t3 - t1) / 2. Therefore, the time when the master chip receives the read data (under the clock of the slave chip) is the time when the slave chip sends the read data plus half of the read operation time, i.e., when the master chip receives the read data at time T' = (t3 - t1) / 2 + t2, the information written to the local clock register should be T'.

Of course, the above are only exemplary descriptions of clock synchronization achieved through direct interaction via the C2C channel. In some embodiments, determining the clock calibration value can also be achieved by: determining the clock calibration value based on the PTP protocol on the C2C channel. That is, establish a connection based on the PTP protocol on the C2C channel, and then determine the clock calibration value and perform calibration according to the clock synchronization scheme provided by the PTP protocol. The clock synchronization scheme provided by the PTP protocol is already provided in the PTP protocol and will not be repeated here.

It should be noted that when the clock calibration value is determined based on the PTP protocol, the C2C channel is actually reused. On one hand, based on the data communication function of the C2C channel itself, it provides a communication method for interaction between the master chip and the slave chip. On the other hand, using the C2C channel as the communication channel for the PTP protocol, system synchronization can be achieved through a software handshake mechanism on this channel.

In some embodiments, the clock calibration value is used to synchronize the clock of the slave chip to the clock of the master chip, and performing clock calibration according to the clock calibration value can be achieved by: writing the clock calibration value and the current clock time of the master chip into the clock register of the slave chip through a write operation initiated by the master chip. In this way, the slave chip can directly restart timing based on the time indicated by the combination of the clock calibration value and the current clock time of the master chip, thereby synchronizing the clock of the slave chip to the clock of the master chip, and the like. In this case, the clock calibration value is a difference between the clock of the master chip and the clock of the slave chip.

In some implementations, the clock calibration value is used to synchronize the clock of the master chip to the clock of the slave chip, and performing clock calibration according to the clock calibration value can be achieved by: modifying the clock register of the master chip according to the clock calibration value and the timestamp when the slave chip returns the read data.

In this way, the master chip can directly restart timing based on the time indicated by the combination of the clock calibration value and the timestamp when the slave chip returns the read data (without needing additional interactive operations to obtain the current clock time of the slave chip), thereby synchronizing the master chip's clock to the slave chip's clock, and the like. In this case, the clock calibration value is the difference between the clock of the master chip and the clock of the slave chip.

Furthermore, this embodiment does not limit the timing of clock synchronization. In situations where the requirement for clock synchronization deviation is not high, or the precision of the master chip and the slave chip is high, specific timings can be set to trigger clock synchronization, such as using the startup process of the master chip and the slave chip as the timing for clock synchronization. In some cases, to ensure the synchronization accuracy of the master chip and the slave chip in real time, the clock synchronization method provided in present disclosure embodiment can be executed when no data communication is occurring. For example, the clock synchronization method is executed during at least two data communication processes between the master chip and the slave chip, or even executed periodically during each data communication process. It is understandable that since actual different chips have frequency deviations under the same clock configuration, the master chip and the slave chip need to be re-synchronized regularly during use to ensure the accuracy of the synchronization clock of the system. According to the description of the foregoing embodiments, this clock synchronization method only writes the clock calibration value to the clock register of the object being calibrated (writing T to the clock register of the slave chip, or writing T' to the clock register of the master chip), thereby completing the synchronization of clocks of the master chip and the slave chip. Therefore, the master chip can interleave write operations during data transmission gaps (i.e., the aforementioned non-data communication periods, or the gaps between data communications) to update the slave clock register and complete re-synchronization. Therefore, executing the clock synchronization method provided in present disclosure embodiment during at least two data communication processes between the master chip and the slave chip does not affect data transmission efficiency while achieving synchronization during the data transmission process, and the like.

It is also understandable that clock synchronization should have an initiator. In some embodiments, the initiator can be the master chip, i.e., the master chip autonomously triggers the operation of synchronizing clock frequencies. In some embodiments, the initiator can also be the slave chip, i.e., before synchronizing the clock frequencies of the master chip and the slave chip, the clock synchronization method further includes: triggering the operation of synchronizing the clock frequencies of the master chip and the slave chip according to a clock synchronization request initiated by the slave chip.

It should be noted that the clock synchronization request can be transmitted through the C2C channel or through other master-slave high-speed data interfaces (such as Low-Voltage Differential Signaling (LVDS)), which will not be elaborated here.

The division of operations in the various methods above is only for the sake of clarity. When implemented, multiple operations can be merged into one operation, or some operations can be split into multiple operations. As long as the same logical relationship is included, it falls within the protection scope of present disclosure. Adding insignificant modifications to the algorithm or process or introducing insignificant designs without changing the core design of the algorithm and process also falls within the protection scope of present disclosure.

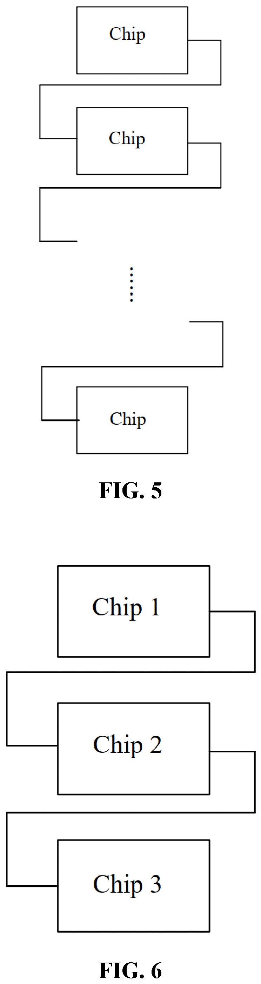

Another aspect of the embodiments of present disclosure also provides a system, as shown in FIG. 5, including: at least two chips that are cascaded.

A respective chip of the at least two chips serves as the master chip, a subordinate chip of the at least two chips that is cascaded with the respective chip serves as the slave chip, and the master chip and the slave chip are configured to perform operations of the clock synchronization method as described in any of the above embodiments.

To facilitate a better understanding of the method for chips to cooperate in achieving clock synchronization by those skilled in the art, the system shown in FIG. 6 will be used as an example for explanation. As shown in FIG. 6, the system includes cascaded Chip 1, Chip 2, and Chip 3, and Chip 2 is the subordinate chip cascaded from Chip 1, and Chip 3 is the subordinate chip cascaded from Chip 2.

First, using Chip 1 as the master chip and Chip 2 as the slave chip, according to the clock synchronization method provided in the foregoing embodiments of present disclosure, synchronizing the clock of Chip 2 to the clock of Chip 1. Then, using Chip 2 as the master chip and Chip 3 as the slave chip, according to the clock synchronization method provided in the foregoing embodiments of present disclosure, synchronizing the clock of Chip 3 to the clock of Chip 2 (at this point, based on the previous operation, the clock of Chip 2 has already been synchronized to the clock of Chip 1). Finally, the clocks of Chip 2 and Chip 3 are both synchronized to the clock of Chip 1, causing the entire system to be synchronized to the same clock.

It is not difficult to see that this embodiment is a system embodiment corresponding to the method embodiments. This embodiment can be implemented in cooperation with the method embodiments. The relevant technical details mentioned in the method embodiments are still valid in this embodiment and will not be repeated here to avoid redundancy. Correspondingly, the relevant technical details mentioned in this embodiment can also be applied in the method embodiments.

Furthermore, in order to highlight the innovative part of present disclosure, units that are not closely related to solving the technical problems proposed in present disclosure are not introduced in this embodiment. However, this does not mean that there are no other units in this embodiment.

Another aspect of the embodiments of present disclosure also provides an electronic device, which is the system described in the above embodiment, or is used to perform the clock synchronization method provided in any of the above embodiments.

The device can be a component or a product applied in fields such as transportation, consumer electronics, monitoring, in-cabin detection, and healthcare, and the like. For example, the terminal can be an intelligent transportation device (such as cars, motorcycles, ships, subways, trains, and the like), security devices (such as cameras), liquid level/flow rate detection devices, smart wearable devices (such as bracelets, glasses, and the like), smart home devices (such as sweeping robots, door locks, TVs, air conditioners, smart lights, and the like), various communication devices (such as mobile phones, tablet computers, and the like), as well as such as barrier gates, intelligent traffic lights, intelligent signs, traffic cameras, and various industrial mechanical arms (or robots), and the like. It can also be various instruments for detecting life characteristic parameters and various devices equipped with these instruments, such as automotive in-cabin detection, indoor personnel monitoring, smart medical devices, consumer electronic devices, and the like.

Alternatively, when the above device is applied to an Advanced Driving Assistance System (ADAS), as a wireless electronic device for vehicle sensors, it can provide various functional safety assurances for the ADAS system, such as Autonomous Emergency Braking (AEB), Blind Spot Detection (BSD), Lane Change Assist (LCA), Rear Cross Traffic Alert (RCTA), and the like.

It is not difficult to see that this embodiment is a device embodiment corresponding to the system embodiment. This embodiment can be implemented in cooperation with the system embodiment. The relevant technical details mentioned in the system embodiment are still valid in this embodiment and will not be repeated here to avoid redundancy. Correspondingly, the relevant technical details mentioned in this embodiment can also be applied in the system embodiment.

Another aspect of the embodiments of present disclosure also provides a computer-readable storage medium storing a computer program. The computer program, when executed by a processor, performs the method embodiments described above.

That is, those skilled in the art can understand that all or part of the operations in the methods of the above embodiments can be implemented by a program instructing relevant hardware. The program is stored in a storage medium and includes several instructions to enable a device (which can be a single-chip microcomputer, chip, and the like) or a processor to perform all or part of the operations of the methods described in the various embodiments of present disclosure. The aforementioned storage medium includes: U disk, mobile hard disk, Read-Only Memory (ROM), Random Access Memory (RAM), magnetic disk, or optical disk, and other various media that can store program code.

Those of ordinary skill in the art can understand that the above embodiments are specific embodiments for implementing present disclosure. In practical applications, various changes can be made in form and details without departing from the spirit and scope of present disclosure.

**Claims**

1. A clock synchronization method, comprising:

   synchronizing clock frequencies of a master chip and of a slave chip, wherein the master chip and the slave chip interact with each other through an inter-chip communication channel;
   determining a clock calibration value configured for characterizing a clock difference between the master chip and the slave chip; and
   performing clock calibration according to the clock calibration value to synchronize clocks of the master chip and of the slave chip.

2. The clock synchronization method according to claim 1, wherein determining the clock calibration value, comprises:
   determining the clock calibration value according to timestamp information during a read operation initiated by the master chip to the slave chip.

3. The clock synchronization method according to claim 2, wherein the clock calibration value is configured for synchronizing the clock of the slave chip to the clock of the master chip; and
   performing clock calibration according to the clock calibration value, comprises:
   writing the clock calibration value into a clock register of the slave chip through a write operation initiated by the master chip.

4. The clock synchronization method according to claim 2 or claim 3, wherein determining the clock calibration value according to the timestamp information during the read operation initiated by the master chip to the slave chip, comprises:

   determining the clock calibration value using the following formula:

   $$T=(t3-t1)/2-(t2-t1)+t4;$$

   wherein T represents the clock calibration value, t1 represents a timestamp when the master chip initiates a read command, t2 represents a timestamp when the slave chip returns read data, t3 represents a timestamp when the master chip receives the read data, and t4 represents a timestamp when the master chip initiates a write operation.

5. The clock synchronization method according to claim 2, wherein the clock calibration value is configured for synchronizing the clock of the master chip to the clock of the slave chip; and
   performing clock calibration according to the clock calibration value, comprises:
   modifying a clock register of the master chip according to the clock calibration value.

6. The clock synchronization method according to claim 5, wherein determining the clock calibration value according to the timestamp information during the read operation initiated by the master chip to the slave chip, comprises:

   determining the clock calibration value using the following formula:

   $$T'=(t3-t1)/2+t2;$$

   wherein T' represents the clock calibration value, t1 represents a timestamp when the master chip initiates a read command, t2 represents a timestamp when the slave chip returns read data, and t3 represents a timestamp when the master chip receives the read data.

7. The clock synchronization method according to any one of claims 1 to 6, wherein the inter-chip communication channel comprises a C2C channel.

8. The clock synchronization method according to claim 1 or claim 7, wherein determining the clock calibration value, comprises:
   determining the clock calibration value based on a PTP protocol on the C2C channel.

9. The clock synchronization method according to any one of claims 1 to 8, wherein synchronizing the clock frequencies of the master chip and of the slave chip, comprises:

   modifying the clock frequency and a division factor of the slave chip according to a global clock frequency and a division factor of the master chip; or
   modifying the clock frequency and a division factor of the master chip according to a global clock frequency and a division factor of the slave chip; or

adjusting the clock frequency of the master chip and the clock frequency of the slave chip to a reference clock frequency.

10. The clock synchronization method according to any one of claims 1 to 9, wherein operations of the clock synchronization method are performed during at least two data communication processes between the master chip and the slave chip.

11. The clock synchronization method according to any one of claims 1 to 10, wherein before synchronizing the clock frequencies of the master chip and of the slave chip, the clock synchronization method further comprises:

triggering the operation of synchronizing the clock frequencies of the master chip and of the slave chip according to a clock synchronization request initiated by the slave chip.

12. A system, comprising: at least two chips that are cascaded, wherein a respective chip of the at least two chips serves as the master chip, a subordinate chip of the at least two chips that is cascaded with the respective chip serves as the slave chip, and the master chip and the slave chip are configured to perform operations of the clock synchronization method according to any one of claims 1 to 11.

13. An electronic device, comprising the system according to claim 12, or configured to perform operations of the clock synchronization method according to any one of claims 1 to 11.

14. A non-transitory computer-readable storage medium, configured to store a computer program, which, when executed by a processor, causes the processor to perform operations of the clock synchronization method according to any one of claims 1 to 11.

Synchronizing clock frequencies of a master chip and a slave chip, where the master chip and the slave chip interact through an inter-chip communication channel | 101

Determining a clock calibration value | 102

Performing clock calibration according to the clock calibration value to synchronize clocks of the master chip and the slave chip | 103

**FIG. 1**

Master chip - - - - C2C channel - - - - - Slave chip

**Clock timestamp of the master chip**

**Clock timestamp of the slave chip**

t1

Read command

t2

Read data

t3

**FIG. 2**

**FIG. 3**

**Master chip**

**Slave chip**

Clock timestamp of the master chip

Clock timestamp of the slave chip

t0 — Write command → t0

t1 — Read command → t2

Read data

t3

t4 — Write command → t4+t5

**FIG. 4**

FIG. 5

FIG. 6

## INTERNATIONAL SEARCH REPORT

| International application No. |
| --- |
| **PCT/CN2024/143499** |

### A. CLASSIFICATION OF SUBJECT MATTER

H04J3/06(2006.01)i

According to International Patent Classification (IPC) or to both national classification and IPC

### B. FIELDS SEARCHED

Minimum documentation searched (classification system followed by classification symbols)

IPC:H04J3/-

Documentation searched other than minimum documentation to the extent that such documents are included in the fields searched

Electronic data base consulted during the international search (name of data base and, where practicable, search terms used)

CNABS: CNTXT; CNKI; 百度, BAIDU; 万方, WANFANG: 时钟, 同步, 主, 从, 芯片, 级联, 雷达, 频率, 差, 时间戳, 读, 写, 校准; DWPI: VEN; USTXT; EPTXT; WOTXT; JPTXT; KRTXT; IEEE: clock, synchronizat+, master, slave, chip, IC, cascad +, radar, frequency, difference, offset, timestamp, read+, writ+, calibrat+

### C. DOCUMENTS CONSIDERED TO BE RELEVANT

| Category* | Citation of document, with indication, where appropriate, of the relevant passages | Relevant to claim No. |
| --- | --- | --- |
| X | CN 112119366 A (SZ DJI TECHNOLOGY CO., LTD.) 22 December 2020 (2020-12-22) description, paragraphs [0022]-[0084] | 1-14 |
| A | CN 110858186 A (SYNAPTICS INC.) 03 March 2020 (2020-03-03) entire document | 1-14 |
| A | CN 116893410 A (CALTERAH SEMICONDUCTOR TECHNOLOGY (SHANGHAI) CO., LTD.) 17 October 2023 (2023-10-17) entire document | 1-14 |
| A | CN 116647302 A (INSPUR-CISCO NETWORKING TECHNOLOGY CO., LTD.) 25 August 2023 (2023-08-25) entire document | 1-14 |
| A | CN 115996205 A (BEIJING SMARTCHIP MICROELECTRONICS TECHNOLOGY CO., LTD.) 21 April 2023 (2023-04-21) entire document | 1-14 |
| A | US 2020292666 A1 (UHNDER, INC.) 17 September 2020 (2020-09-17) entire document | 1-14 |

☐ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **04 March 2025** | **05 March 2025** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/143499**

| Patent document cited in search report | | | Publication date (day/month/year) | Patent family member(s) | | | Publication date (day/month/year) |
|---|---|---|---|---|---|---|---|
| CN | 112119366 | A | 22 December 2020 | WO | 2021081806 | A1 | 06 May 2021 |
| CN | 110858186 | A | 03 March 2020 | US | 2021200259 | A1 | 01 July 2021 |
| | | | | US | 11644862 | B2 | 09 May 2023 |
| | | | | US | 2020064880 | A1 | 27 February 2020 |
| | | | | US | 10983553 | B2 | 20 April 2021 |
| | | | | JP | 2020053024 | A | 02 April 2020 |
| | | | | JP | 7449052 | B2 | 13 March 2024 |
| | | | | CN | 110858186 | B | 28 January 2025 |
| CN | 116893410 | A | 17 October 2023 | | None | | |
| CN | 116647302 | A | 25 August 2023 | | None | | |
| CN | 115996205 | A | 21 April 2023 | CN | 115996205 | B | 16 May 2023 |
| US | 2020292666 | A1 | 17 September 2020 | US | 11977178 | B2 | 07 May 2024 |
| | | | | US | 2020292665 | A1 | 17 September 2020 |
| | | | | US | 11681017 | B2 | 20 June 2023 |
| | | | | WO | 2020183392 | A1 | 17 September 2020 |
| | | | | US | 2024288539 | A1 | 29 August 2024 |
| | | | | WO | 2020183421 | A1 | 17 September 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311870038X